# EUROPÄISCHE PATENTSCHRIFT

(11) **EP 2 681 530 B1**
(45) Veröffentlichungstag und Bekanntmachung des Hinweises auf die Patenterteilung: **25.06.2014**
(21) Anmeldenummer: 12708518.1
(22) Anmeldetag: 27.02.2012
(51) Int. Cl.: G01N 21/03, G01N 21/05, G01N 1/28

(54) **DURCHSTRÖMBARE MESSZELLE**
PERMEABLE MEASURING CELL
CELLULE DE MESURE À CIRCULATION

(30) Priorität: 04.03.2011 DE 102011013002
(43) Veröffentlichungstag der Anmeldung: 08.01.2014
(73) Patentinhaber: Optek-Danulat GmbH, 45356 Essen (DE)
(72) Erfinder: PLATTE, Daniel, 42555 Velbert (DE); SCHROEREN, Peter, 47906 Kempen (DE); DANULAT, Jürgen, 40822 Mettmann (DE); REESE, Andreas, 45141 Essen (DE)
(74) Vertreter: Müller, Karl-Ernst
(86) Internationale Anmeldenummer: PCT/EP2012/053272
(87) Internationale Veröffentlichungsnummer: WO 2012/119880

(56) Entgegenhaltungen:
- DE-A1- 2 041 256
- US-A- 3 614 243
- US-A- 3 810 695

## Beschreibung

Die vorliegende Erfindung betrifft eine durchströmbare Messzelle gemäß Patentanspruch 1 und ein System gemäß Patentanspruch 6.

Zur Messung der Wechselwirkung elektromagnetischer Strahlung mit Fluiden in einer Messzelle müssen für den für die Messung relevanten Bereich des elektromagnetischen Spektrums durchlässige beziehungsweise transparente Fenster in der Messzelle vorgesehen sein. Die Fenster müssen einen Messraum der Messzelle gegenüber der Umgebung abdichten, auch bei etwaigen höheren Drücken. Dies gilt insbesondere für Inline-Messzellen.

Insbesondere bei Absorptionsmessungen ist es notwendig, die resultierende Schichtdicke beziehungsweise die optische Pfadlänge entlang des Strahlengangs der elektromagnetischen Strahlung genau zu kennen, um die Messwerte entsprechend auswerten zu können.

Bei manchen Messzellenanwendungen ist es erforderlich, die Messzelle häufig zu reinigen und/oder eine andere Schichtdicke zur Verfügung zu stellen. Bisher werden hierzu unterschiedliche Messzellen verwendet oder verschiedene Einsätze für verschiedene Schichtdicken vorgesehen.

In der US 5,905,271 ist eine Messzelle mit komplexem mechanischen Aufbau offenbart, bei der eine Verstellung der optischen Pfadlänge, also des Abstands zwischen den Fenstern, in einem sehr kleinen Bereich (durch Komprimierung der Dichtung 31 am Anschlag 22) ermöglicht wird.

Messzellen mit variabler Pfadlänge sind in der US 3,614,243 und der US3,810,695 offenbart. Die DE 20 41 256 A1 offenbart ein Photometer mit einer Messzone und einer deformierten Wand zwischen zwei feststehenden parallelflächigen Platten.

Aufgabe der vorliegenden Erfindung ist es, eine flexibel einsetzbare, kostengünstig herstellbare Messzelle anzugeben.

Diese Aufgabe wird mit den Merkmalen der Patentansprüche 1 und 6 gelöst. Vorteilhafte Weiterbildungen der Erfindung sind in den Unteransprüchen angegeben.

Der Erfindung liegt der Gedanke zugrunde, mindestens eines der im Strahlengang angeordneten Fenster ohne Verstellanbauten an der Messzelle beziehungsweise am Messzellenkörper entlang des Strahlengangs bei der Montage einstellbar oder jederzeit verstellbar auszubilden, damit eine (einmalige) Einstellung oder eine Verstellung des Abstands A, A' zwischen den Fenstern zumindest in einem Verstellzustand der Messzelle, insbesondere bei einem vorgegebenen Temperaturbereich, ermöglicht wird. Mit anderen Worten: Die Messzelle weist mehrere Betriebspositionen auf, in welche die Messzelle eingestellt oder verstellt werden kann. Durch diese Maßnahme ist eine Messzelle mit geringstmöglichen Kosten herstellbar, da ein großes Spektrum an Abständen A, A' (entspricht insbesondere der optischen Pfadlänge der Messzelle) entlang des Verstellbereichs einstellbar ist, insbesondere bei der Montage. Bei oder nach der Montage und Einstellung kann das oder die Fenster fixierbar sein, so dass eine Verstellung nicht mehr möglich ist,

Bei Vorsehen einer Verstellbarkeit (also ohne Fixierung der Fenster) entfällt die Notwendigkeit, die Messzelle zur Änderung der Schichtdicke auszutauschen oder zumindest einen Einsatz der Messzelle austauschen. Der Anwender kann den Abstand A, A' innerhalb eines Stellbereichs beliebig einstellen.

Die Konstruktion der Messzelle sieht vor, dass die Einstellung/Verstellung rotationslos erfolgen kann. Eine komplexe Mechanik wird dadurch vermieden. Auch kann auf Anschläge zur Begrenzung der Bewegung verzichtet werden.

Es ist insbesondere denkbar, die Fenster erfindungsgemäß in einer besonders einfach herstellbaren Grundform vorzusehen. Auf Ausformungen der Außenkontur, insbesondere Anschläge oder dergleichen, kann verzichtet werden. Insbesondere ist die Außenkontur der Fenster plan oder absatzlos oder in jedem Querschnitt entlang des Strahlengangs rechteckig. Quer zum Strahlengang kann das Fenster einen kreisförmigen Querschnitt mit identischem Durchmesser über die gesamte Fensterlänge (gegebenenfalls abgesehen von einer Fase an den Stirnseiten der Fenster) aufweisen. Das Fenster weist in einer besonders einfach herstellbaren Variante eine Kreiszylinderform auf. Alternativ kann die einfache Grundform auch in einer plattenförmigen Ausgestaltung mit quer zum Strahlengang rechteckigem Querschnitt bestehen.

Anders ausgedrückt ist die Betriebsposition durch Aufbringung einer Druckkraft in Richtung des Strahlengangs ausschließlich von außerhalb der Messzelle auf die Fenster, gegebenenfalls in Kombination mit einem Distanzelement zwischen den Fenstern zur Begrenzung der Bewegung, einstellbar. Ausschließlich von außerhalb heißt, dass an der Messzelle selbst keine mechanischen Mittel zur Druckbeaufschlagung vorgesehen sind.

Soweit die Messzelle zumindest an der Fensteraufnahme, insbesondere der überwiegende Teil der Messzelle, vorzugsweise im Wesentlichen die gesamte Messzelle, aus Kunststoff gebildet ist, ist eine kostengünstige Herstellung der Messzelle möglich. Außerdem ist die Messzelle als Einwegmesszelle ausführbar. Darüber hinaus kann mindestens eines der Fenster im Presssitz ausgeführt werden, so dass der Abstand A. A' entlang des Presssitzes einstellbar und zumindest in Richtung des gegenüberliegenden Fensters einfach durch Druck von außen verstellbar ist. Hierdurch vereinfacht sich die Montage, da mit identischen Messzellen verschiedene optische Pfadlängen realisierbar sind. Bei der Montage der Messzelle kann der eingestellte Abstand A, A' (beziehungsweise die optische Pfadlänge) fixiert und entsprechend gekennzeichnet werden, insbesondere durch eine Kodierung der Messzelle.

Auch ist es erfindungsgemäß denkbar, dass die Betriebsposition entlang einer Passung des Fensters oder einer das Fenster aufnehmenden Fensteraufnahme in der Messzelle einstellbar oder verstellbar ist, bevorzugt durch direkte Passung des Fensters gegenüber dem, insbesondere als Ausformung der Messzellenwand ausgebildeter, Führungskanal der Messzelle beziehungsweise des Messzellenkörpers. Die Passung erfolgt gegenüber der Eintritts- beziehungsweise Austrittsöffnung und weist eine Toleranz auf, bei der die Fenster zumindest bei der Montage entlang des Strahlengangs durch Druckbeaufschlagung von außerhalb der Messzelle verschiebbar sind. Gleichzeitig wird durch die Toleranz der Passung eine Dichtung des Messraums gegenüber der Umgebung der Messzelle, insbesondere ohne gesonderte Dichtmittel (wie Dichtringe) gewährleistet. Der Nenndurchmesser der Passung ist entlang des Verstellbereichs gleich.

Hierbei kann eines oder können beide Fenster entlang deren Flucht zueinander, insbesondere entlang eines der Außenkontur des Fensters entsprechenden Fensteraufnahmekanals, vorzugsweise durch Reibschluss in diesem gehalten, verstellbar sein. Soweit beide Fenster verstellbar sind, ist ein größerer Verstellbereich realisierbar. Der Reibschluss wird durch entsprechende Passung des Fensters beziehungsweise der Fensteraufnahme bewirkt. Der Fensteraufnahmekanal hat vorzugsweise im Verstellbereich parallele Kanalwände.

Gemäß der Erfindung ist mit Vorteil vorgesehen, dass mindestens eine den Messraum begrenzende Wand entlang der Flucht der Fenster flexibel verformbar ist und ein Distanzelement zum Fixieren der Fensterebene in einem durch die Auswahl des Distanzelements vorgegebenen Abstands außerhalb des Messraums zwischen die Fenster einsetzbar ist. Durch diese Ausführungsformen lässt sich ein besonders großer Verstellbereich realisieren.

Besonders vorteilhaft ist es dabei, wenn die Wand als Balg ausgebildet ist.

Gemäß einer weiteren, vorteilhaften Ausführungsform der Erfindung ist vorgesehen, dass sich der Stellbereich von einem kleinsten einstellbaren Abstand A, A' mindestens um den Faktor 1,5, insbesondere mindestens um den Faktor 2, vorzugsweise mindestens um den Faktor 3 des kleinesten einstellbaren Abstands A, A' erstreckt. Je größer der Stellbereich, desto flexibler ist die Messzelle einsetzbar.

Als eigenständige Erfindung ist ein System aus einer vorbeschriebenen Messzelle mit mehreren Distanzelementen unterschiedlicher Länge zur Einstellung eines durch das jeweilige Distanzelement definierten Abstands A'. vorgesehen. Hierdurch ist es möglich, ein Set mit verschiedenen Stufen für definierte optische Pfadlängen beziehungsweise Abstände A' anzubieten. Der Anwender kann das Set für entsprechend verschiedene Einsatzbedingungen verwenden, ohne verschiedene Messzellen vorrätig zu halten.

Soweit das/die Distanzelemente als U-förmige Profile ausgebildet sind, wird die Montage der Messzelle, insbesondere beim Verstellen, erleichtert. Besonders vorteilhaft ist es, das kein Eingriff in den Messraum oder ein Öffnen des Messraums beim Ändern des Abstands A erforderlich ist.

Soweit die Wand gleichzeitig zum Abdichten des Messraums dichtend an einem der Fenster angeordnet, insbesondere fixiert ist, erfüllt die Wand eine Doppelfunktion, wodurch zusätzliche Bauteile wie Dichtringe etc. überflüssig sind.

Weitere Vorteile, Merkmale und Einzelheiten der Erfindung ergeben sich aus der nachfolgenden Beschreibung bevorzugter Ausführungsbeispiele sowie anhand der Zeichnungen. Diese zeigen in:
- Figur 1: eine Querschnittsansicht einer ersten Ausführungsform einer erfindungsgemäßen Messzelle,
- Figur 2: eine Querschnittsansicht einer zweiten Ausführungsform der erfindungsgemäßen Messzelle,
- Figur 3a: eine perspektivische Ansicht einer dritten Ausführungsform der erfindungsgemäßen Messzelle,
- Figur 3b: eine Querschnittsansicht der Ausführungsform gemäß Figur 3b entlang einer Schnittebene A_{S} und
- Figur 3c: eine Querschnittsansicht der dritten Ausführungsform entlang einer Schnittebene B_{S} aus Figur 3a.

In den Figuren sind gleiche Elemente und Elemente mit den gleichen Funktionen mit den gleichen Bezugszeichen gekennzeichnet.

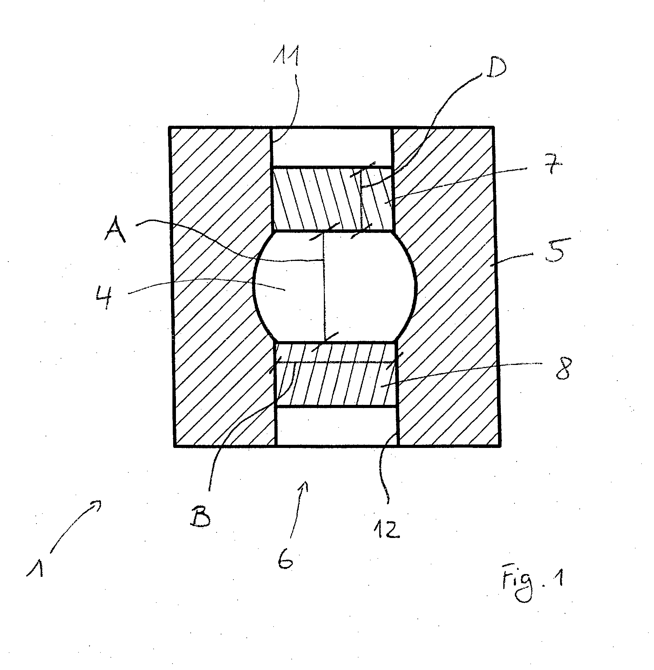

In Figur 1 ist eine mit einem Fluid durchströmbare Messzelle 1 gezeigt, die einen von einem Messzellenkörper 5 begrenzten Messraum 4 aufweist. Der Messraum 4 wird von einem Fluid durchströmt, dessen Wechselwirkung mit einer elektromagnetischen Strahlung, insbesondere Licht aus einer Lichtquelle, gemessen werden soll.

Hierzu ist ein Strahlungsmessbereich 6 vorgesehen, an dem quer zur Strömungsrichtung des Fluids von einer nicht dargestellten Strahlungsquelle, insbesondere der Lichtquelle, elektromagnetische Strahlung durch das Fluid geleitet wird. Auf der gegenüberliegenden Seite wird die elektromagnetische Strahlung gemessen.

Im Strahlengang (Strahlenrichtung quer zur Strömungsrichtung) sind Fenster 7, 8 vorgesehen, um den Durchtritt der elektromagnetischen Strahlung durch den Messraum 4 in das Fluid zuzulassen. Die Fenster 7, 8 sind jeweils in Führungskanälen 11, 12 geführt, deren Innenkontur der Außenkontur der Fenster 7, 8 entspricht, so dass zwischen den Fenstern 7, 8 und dem jeweiligen Führungskanal 11, 12 eine Passung vorgesehen ist. Hierdurch ist eine Verstellung der Fenster 7, 8 entlang der Innenkontur der Führungskanäle 11, 12 möglich, so dass ein Abstand A zwischen den Fenstern 7, 8 einstellbar beziehungsweise verstellbar ist. Der Abstand A entspricht insbesondere der optischen Pfadlänge.

Die Fenster 7, 8 sind aus Quarzglas gebildet, während der Messzellenkörper 5 beim vorliegenden Ausführungsbeispiel aus Kunststoff besteht. Die Abmessungen der Außenkontur der Fenster 7, 8 und der Innenkonturen der Führungskanäle 11, 12 sind so bemessen, dass die Fenster 7, 8 bei Raumtemperatur, also bei circa 20° C, gleitend entlang den Führungskanälen 11, 12 verschiebbar sind, wobei auch unter Prozessbedingungen, also bei erhöhten Temperaturen, insbesondere größer 40° C, vorzugsweise größer 60° C, ein Reibschluss zwischen der Außenkontur der Fenster 7, 8 und der jeweiligen Innenkontur der Führungskanäle 11, 12 vorgesehen ist, so dass die Fenster 7, 8 auch bei Drücken, insbesondere größer 3 bar den Messraum 4 gegenüber der Umgebung abdichten. Die Toleranz der Passungen ist entsprechend ausgebildet, wobei die unterschiedlichen Dehnungen der verschiedenen Materialien berücksichtigt werden.

Hierzu ist erfindungsgemäß mit Vorteil vorgesehen, dass die Fenster 7, 8 eine Dicke D aufweisen, die im Verhältnis zu einer Breite B der Fenster 7, 8 größer als üblich ist. Bevorzugt ist das Verhältnis D zu B mindestens 1:10, insbesondere mindestens 1:5, vorzugsweise mindestens 1:3, noch bevorzugter mindestens 1:2.

Auch ist es erfindungsgemäß denkbar, die Fenster 7, 8 nach Einstellung eines Abstands A bei der Herstellung/Montage der Fenster 7, 8 zu fixieren, so dass eine Verstellung der Fenster ausgeschlossen ist. Dies ist insbesondere bei Verwendung der Messzelle 1 als Einwegmesszelle von Vorteil.

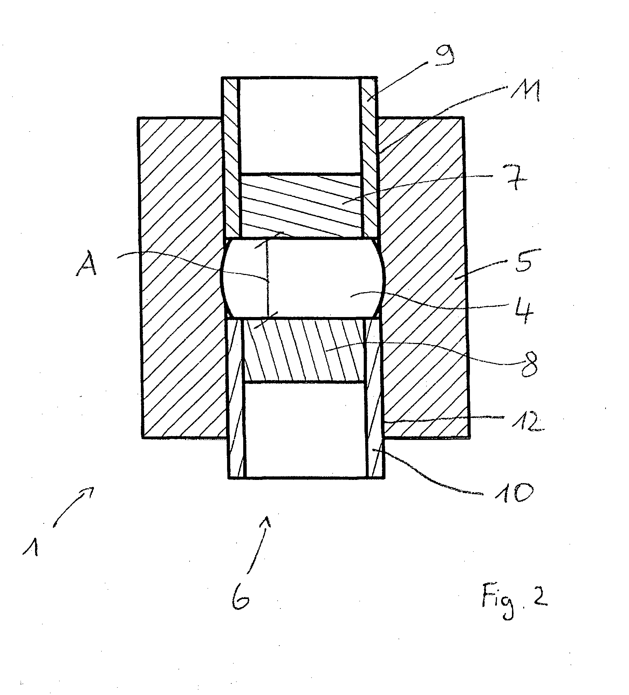

In der zweiten, sehr ähnlich zur ersten ausgebildeten Ausführungsform gemäß Figur 2 ist im Unterschied zu der Ausführungsform gemäß Figur 1 je eine Fensteraufnahme 9, 10 zur Aufnahme der Fenster 7, 8 vorgesehen. Die Fensteraufnahmen 9, 10 sind röhrenförmig mit einer Innenkontur ausgebildet, die zur Außenkontur der Fenster 7, 8 korrespondiert, so dass die Fenster 7, 8 in den Fensteraufnahmen 9, 10 fixiert sind. Die Fenster 7, 8 sind jeweils an dem zum Messraum 4 weisenden Ende der Fensteraufnahme 9, 10, insbesondere bündig zu den Fensteraufnahmen 9, 10, in den Fensteraufnahmen 9, 10 fixiert. Die Fensteraufnahmen 9, 10 korrespondieren mit ihrer Außenkontur mit den Führungskanälen 11, 12 derart, dass die oben beschriebene Wechselwirkung zwischen den Fenstern 7, 8 und den Führungskanälen 11, 12 wie bei der ersten Ausführungsform gemäß Figur 1 gelten. Sowohl die Führungskanäle 11, 12 und die Fensteraufnahmen 9, 10 als auch die Fensteraufnahmen 9, 10 und die Fenster 7, 8 weisen eine Passung zueinander auf. Die Passung kann jeweils so ausgebildet sein, dass ein gegenseitiges Verschieben bei nur einem der beiden Passungen möglich ist. Vorteilhafterweise können beide Passungen verschiebbar ausgebildet sein, wodurch ein größerer Verstellbereich realisierbar ist.

Indem die Fensteraufnahmen 9, 10 an ihren jeweils den Fenstern 7, 8 abgewandten Enden über den Messzellenkörper 5 beziehungsweise über die Führungskanäle 11, 12 hinausragen, wird das Verstellen des Abstands A zwischen den Fenstern 7, 8 vereinfacht, insbesondere beim Vergrößern des Abstands A. Denn die Fensteraufnahmen 9, 10 können an ihren den Messzellenkörper 5 beziehungsweise die Führungskanäle 11, 12 überragenden Enden gegriffen werden. Anhand der Abmessungen der Fensteraufnahmen 9, 10 entlang des Strahlengangs kann der Abstand A, also die optische Pfadlänge, gemessen und berechnet werden und ist entsprechend automatisch einstellbar. Hierbei ist es von Vorteil, wenn nur die Passung zwischen den Führungskanälen 11, 12 und den Fensteraufnahmen 9, 10 verschiebbar ausgeführt ist.

Die Ausführungen zur ersten Ausführungsform gelten auch für die zweite Ausführungsform analog.

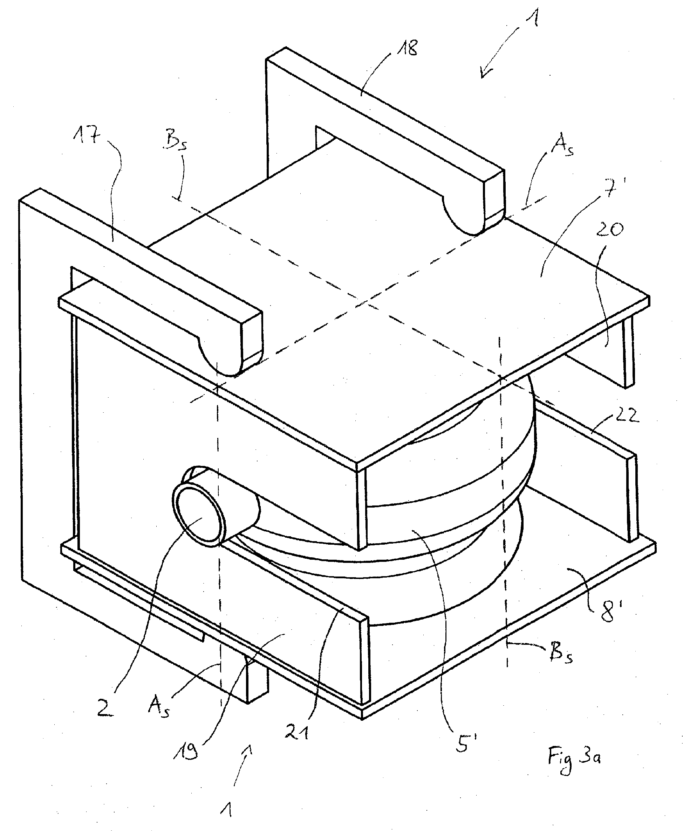

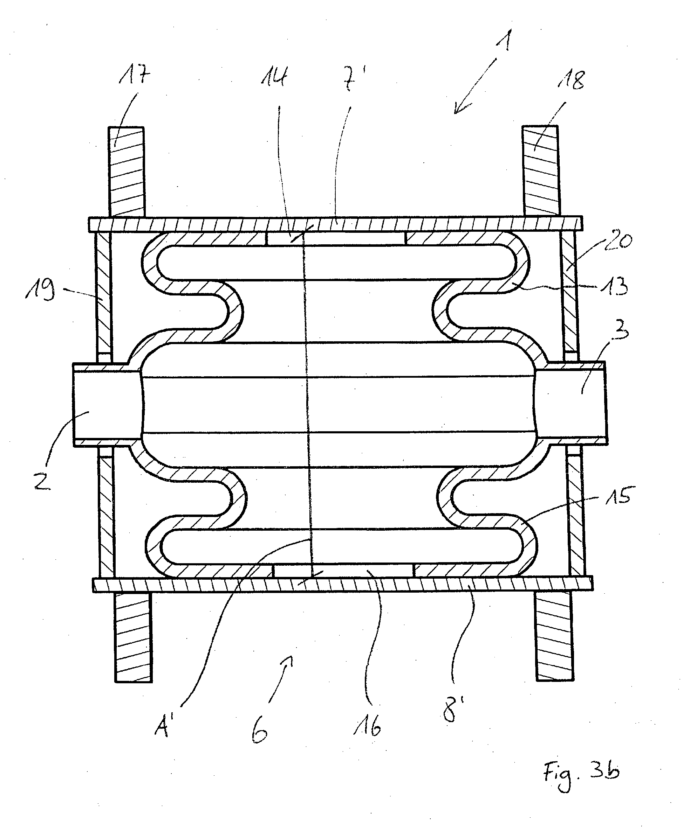

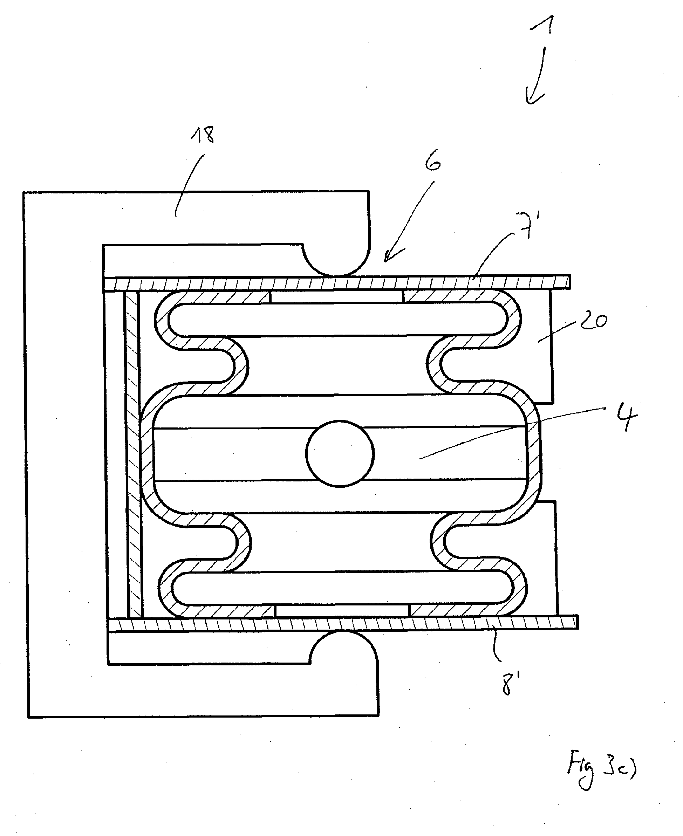

In Figur 3a ist eine Messzelle 1' mit einem überwiegend aus flexiblem Material, insbesondere Gummi, bestehendem Messzellenkörper 5' gezeigt. Das zu messende Fluid wird über eine Eintrittsöffnung 2 in einen Messraum 4' geleitet und verlässt den Messraum 4' über eine in Figur 3b dargestellte Austrittsöffnung 3. Die Eintrittsöffnung 2 und die Austrittsöffnung 3 verfügen über Prozessanschlüsse zur Einbindung der Messzelle 1' in eine Prozessleitung, also zur Inline-Messung.

Quer zur Strömungsrichtung des Fluids ist ein Strahlungsmessbereich 6 vorgesehen, in welchem die Wechselwirkung des Fluids mit elektromagnetischer Strahlung gemessen wird.

Die Strahlung tritt durch ein Fenster 7' in den Messraum 4' ein und durch ein gegenüberliegend angeordnetes Fenster 8' aus dem Messraum 4' aus. Die elektromagnetische Strahlung wird von einer nicht dargestellten Strahlenquelle außerhalb der Messzelle 1' erzeugt und quer zur Strömungsrichtung des Fluids durch den Messraum 4' und die Fenster 7', 8' geleitet. Auf der gegenüberliegenden Seite, also unter dem Fenster 8' und außerhalb der Messzelle 1' wird die Strahlung von einer entsprechenden Messeinrichtung erfasst, wobei durch die Wechselwirkung mit dem Fluid entlang der optischen Pfadlänge zwischen den Fenstern 7', 8' das Fluid kennzeichnende Änderungen erfassbar sind.

Wesentlicher Aspekt der Erfassung ist die optische Pfadlänge, die durch einen Abstand A' zwischen dem Fenster 7' und dem Fenster 8' besteht.

Eine als Umfangswand ausgebildete, flexible Wand 13 des Messzellenkörpers 5' ist an der zum Messraum 4' weisenden Seite des Fensters 7' angebracht, wobei, insbesondere im Zentrum des Fensters 7', eine Durchtrittsöffnung 14 vorgesehen ist, damit die elektromagnetische Strahlung in den Messraum 4' eintreten kann. Eine korrespondierende, gegenüberliegend angeordnete, als Umfangswand ausgebildete Wand 15 ist ebenfalls flexibel ausgebildet. Sie ist entsprechend an einer zum Messraum 4' weisenden Seite des Fensters 8' an dem Fenster 8' fixiert und weist eine Durchtrittsöffnung 16 zum Austritt der elektromagnetischen Strahlung durch das Fenster 8' auf.

Der Messzellenkörper 5' beziehungsweise die Messzelle 1' wird durch mindestens einen, im vorliegenden Ausführungsbeispiel zwei U-förmige Federbügel 17, 18 quer zur Strömungsrichtung des Fluids fixiert. Die Federbügel 17, 18 umgreifen den Messzellenkörper 5' und die Fenster 7', 8' jeweils von der dem Messraum 4' abgewandten Seite der Fenster 7', 8'.

Zur Festlegung des Abstands A' zwischen den Fenstern 7', 8' ist mindestens ein, im vorliegenden Ausführungsbeispiel zwei Distanzstücke 19, 20 vorgesehen, die außerhalb des Messzellenkörpers 5' als starre Abstandshalter zwischen den Fenstern 7', 8' eingespannt sind, und zwar durch die Klemmwirkung der Federbügel 17, 18.

Entsprechend kann durch Austausch der Distanzstücke 19, 20 und gegebenenfalls der Federbügel 17, 18 ein durch die Form der Wände 13, 15 begrenzter Verstellbereich des Abstands A' realisiert werden, so dass ein System aus der einheitlichen Messzelle 1' und einem Set von Federbügel 17, 18 und jeweils korrespondierenden Distanzstücken 19. 20 vorgesehen ist.

Erfindungsgemäß ist dabei mit Vorteil vorgesehen, dass für die Verstellung der Abstände A, A' ein Austausch der Fenster 7, 7', 8, 8' nicht erforderlich ist. Die für einen definierten Abstand A' vorgesehenen Federbügel 17, 18 und Distanzstücke 19, 20 können als Sätze mit jeweils definierten Kennzeichnungen verstehen sein, damit ein Austausch entsprechend einfach handhabbar ist.

Die Distanzstücke 19, 20 weisen je eine Montageöffnung 21, 22 auf, insbesondere in dem die Distanzstücke 19, 20 als U-förmige Profile ausgebildet sind, damit eine Verstellung des Abstands A' ohne Abkopplung der Messzelle 1 von den Prozessleitungen ermöglicht wird.

Die Funktion der Federbügel 17, 18 kann gemäß einer nicht dargestellten vorteilhaften Ausführungsform in die Distanzstücke integriert sein, indem die Fenster 7', 8' in die Distanzstücke aufnehmbar sind. Die Distanzstücke können hierzu entsprechende Aufnahmen, insbesondere Stecknuten, an ihren Ober- und Unterseiten aufweisen.

### Bezugszeichenliste

- 1, 1': Messzelle
- 2: Eintrittsöffnung
- 3: Austrittsöffnung
- 4, 4': Messraum
- 5, 5': Messzellenkörper
- 6: Strahlungsmessbereich
- 7, 7': Fenster
- 8, 8': Fenster
- 9: Fensteraufnahme
- 10: Fensteraufnahme
- 11: Führungskanal
- 12: Führungskanal
- 13: Wand
- 14: Durchtrittsöffnung
- 15: Wand
- 16: Durchtrittsöffnung
- 17: Federbügel
- 18: Federbügel
- 19: Distanzstück
- 20: Distanzstück
- 21: Montageöffnung
- 22: Montageöffnung

## Patentansprüche

1. Durchströmbare Messzelle mit:
- einer Eintrittsöffnung (2) zum Einlauf des Fluids,
- einer Austrittsöffnung (3) zum Auslauf des Fluids,
- einem zwischen der Eintrittsöffnung (2) und Austrittsöffnung (3) angeordnetem Messraum (4'),
- einen Strahlungsmessbereich (6) zur Messung der Wechselwirkung des Fluids in der Messzelle (1') mit einer elektromagnetischen Strahlung von außerhalb der Messzelle (1'),
wobei der Strahlungsmessbereich (6) von zwei gegenüberliegend angeordneten Fenstern (7', 8') begrenzt ist, wovon eines zum Eintritt und das andere zum Austritt der elektromagnetischen Strahlung vorgesehen ist, die Messzelle (1') einen Stellbereich mit mehreren Betriebspositionen mit unterschiedlichem Abstand A, A' zwischen den Fenstern (7', 8') aufweist, in die die Messzelle (1') rotationslos einstellbar ist, **dadurch gekennzeichnet, dass**
mindestens eine den Messraum (4') begrenzende Wand (13, 15) entlang der Flucht der Fenster (7', 8') flexibel verfombar ist und ein Distanzelement (19, 20) zum Fixieren der Fenster (7', 8') in einem durch die Auswahl des Distanzelements (19, 20) vorgegebenen Abstand außerhalb des Messraums (4') zwischen die Fenster (7', 8') einsetzbar ist.

2. Messzelle gemäß Patentanspruch 1, bei der die Wand (13, 15) als Balg ausgebildet ist.

3. Messzelle nach einem der vorhergehenden Ansprüche, bei der die Messzelle (1') zumindest teilweise, insbesondere überwiegend, aus Kunststoff und/oder Gummi gebildet ist.

4. Messzelle nach einem der vorhergehenden Ansprüche, bei der die Wand (13, 15) zum Abdichten des Messraums (4') dichtend an einem der Fenster (7', 8') angeordnet, darunter fixiert, ist.

5. Messzelle nach einem der vorhergehenden Ansprüche, bei der sich der Stellbereich von einem kleinsten einstellbaren Abstand A, A' mindestens um den Faktor 1,5, insbesondere mindestens um den Faktor 2, vorzugsweise mindestens um den Faktor 3 des kleinesten einstellbaren Abstands A, A' erstreckt.

6. System aus einer Messzelle (1') nach einem der Ansprüche 1 bis 5 mit mehreren Distanzelementen (19, 20) unterschiedlicher Länge zur Einstellung eines durch das jeweilige Distanzelement (19, 20) definierten Abstands A'.

7. System nach Anspruch 6, bei dem die Distanzelemente (19, 20) als U-förmige Profile ausgebildet sind.

## Claims

1. A flow-through measuring cell with:
- an inlet opening (2) for entry of the fluid,
- an outlet opening (3) for exit of the fluid,
- a measurement space (4') located between the inlet opening (2) and outlet opening (3),
- a radiation measurement region (6) for measuring the interaction of the fluid in the measuring cell (1') with electromagnetic radiation from outside the measuring cell (1'),
the radiation measurement region (6) being bordered by two opposite windows (7', 8'), of which one is intended for inlet and the other for exit of the electromagnetic radiation, the measuring cell (1') having a positioning range with several operating positions with a different distance A, A' between the windows (7', 8') into which the measuring cell (1') can be set without rotation,
**characterized in that** at least one wall (13, 15) which borders the measurement space (4') can be flexibly deformed along the alignment of the windows (7', 8') and a spacer element (19, 20) for fixing the windows (7', 8') at a distance which is dictated by the choice of the spacer element (19, 20) outside the measurement space (4') can be inserted between the windows (7', 8').

2. The measuring cell as claimed in Claim 1, wherein the wall (13, 15) is made as bellows.

3. The measuring cell as claimed in one of the preceding claims, wherein the measuring cell (1') is formed at least in part, especially predominantly, from plastic and/or rubber.

4. The measuring cell as claimed in one of the preceding claims, wherein the wall (13, 15) for sealing of the measurement space (4') is located, fixed underneath, on one of the windows (7', 8'), forming a seal.

5. The measuring cell as claimed in one of the preceding claims, wherein the positioning range extends from the smallest settable distance A, A' at least by a factor of 1.5, especially at least by a factor of 2, preferably at least by a factor of 3 of the smallest settable distance A, A'.

6. A system of a measuring cell (1') as claimed in one of Claims 1 to 5 with several spacer elements (19, 20) of different length for setting a distance A' which is defined by the respective spacer element (19, 20).

7. The system as claimed in Claim 6, wherein the spacer elements (19, 20) are made as U-shaped sections.

## Revendications

1. Cellule de mesure pouvant être traversée par un flux, avec :
- une ouverture d'entrée (2) pour l'entrée du fluide,
- une ouverture de sortie (3) pour la sortie du fluide,
- une chambre de mesure (4') disposée entre l'ouverture d'entrée (2) et l'ouverture de sortie (3),
- une zone de mesure de rayonnement (6) pour mesurer l'interaction entre le fluide dans la cellule de mesure (1') et un rayonnement électromagnétique d'en dehors de la cellule de mesure (1'),
la zone de mesure de rayonnement (6) étant délimitée par deux fenêtres (7', 8') disposées de manière à se situer en vis-à-vis, l'une d'entre elles étant prévue pour l'entrée et l'autre pour la sortie du rayonnement électromagnétique, la cellule de mesure (1') présentant une zone de réglage avec plusieurs positions de fonctionnement avec un écart différent A, A' entre les fenêtres (7', 8'), dans lesquelles la cellule de mesure (1') peut être réglée sans rotation, **caractérisée en ce que**
au moins une paroi (13, 15) délimitant la chambre de mesure (4') le long de l'alignement des fenêtres (7', 8') peut se déformer élastiquement, et **en ce qu'**un élément espaceur (19, 20) pour la fixation des fenêtres (7', 8') à une distance prescrite par le choix de l'élément espaceur (19, 20) peut être mis en place en dehors de la chambre de mesure (4'), entre les fenêtres (7', 8').

2. Cellule de mesure selon la revendication 1, dans laquelle la paroi (13, 15) est réalisée en tant que soufflet.

3. Cellule de mesure selon l'une des revendications précédentes, dans laquelle la cellule de mesure (1') est formée au moins partiellement, en particulier essentiellement, par du plastique et/ou du caoutchouc.

4. Cellule de mesure selon l'une des revendications précédentes, dans laquelle la paroi (13, 15) pour l'étanchéification de la chambre de mesure (4') en étant disposée de façon étanche à l'une des fenêtres (7', 8') est fixée en-dessous de celle-ci.

5. Cellule de mesure selon l'une des revendications précédentes, dans laquelle la zone de réglage s'étend à partir d'un écart A, A' le plus petit pouvant être réglé, au moins de l'ordre du facteur 1,5, en particulier au moins de l'ordre du facteur 2, de préférence au moins de l'ordre du facteur 3 de l'écart A, A' le plus petit pouvant être réglé.

6. Système formé par une cellule de mesure (1') selon l'une des revendications 1 à 5 avec plusieurs éléments espaceurs (19, 20) de différentes longueurs pour le réglage de l'écart A' défini par l'élément espaceur (19, 20) respectif.

7. Système selon la revendication 6, dans lequel les éléments espaceurs (19, 20) sont réalisés en tant que profils en forme de U.
